Europäisches Patentamt

European Patent Office

Office européen des brevets

(19)

(11) Veröffentlichungsnummer: **0 283 662 B1**

# EUROPÄISCHE PATENTSCHRIFT

(12)

(45) Veröffentlichungstag der Patentschrift: **07.10.92**

(51) Int. Cl.⁵: **G11C 7/00**

(21) Anmeldenummer: **88101069.8**

(22) Anmeldetag: **26.01.88**

(54) Verfahren und Einrichtung zur Aufbereitung asynchroner digitaler Daten.

(30) Priorität: **20.02.87 DE 3705505**

(43) Veröffentlichungstag der Anmeldung:
**28.09.88 Patentblatt 88/39**

(45) Bekanntmachung des Hinweises auf die
Patenterteilung:
**07.10.92 Patentblatt 92/41**

(84) Benannte Vertragsstaaten:
**DE FR GB IT**

(56) Entgegenhaltungen:
**DE-A- 3 332 939**
**US-A- 3 979 691**

(73) Patentinhaber: **GRUNDIG E.M.V. Elektro-Mechanische Versuchsanstalt Max Grundig holländ. Stiftung & Co. KG.**
**Kurgartenstrasse 37**
**W-8510 Fürth/Bay.(DE)**

(72) Erfinder: **Hegendörfer, Max, Dipl.-Ing. GRUNDIG E.M.V.**
**Max Grundig holländ Stiftung & Co KG**
**Kurgartenstrasse 37 D-8510 Fürth/Bay(DE)**

## Beschreibung

Die Erfindung betrifft ein Verfahren zur Aufbereitung asynchroner digitaler Daten mit den im Oberbegriff des Anspruchs 1 angegebenen Merkmalen sowie eine Einrichtung zur Durchführung des genannten Verfahrens. Ein solches Verfahren ist aus DE-A-3 332 939 bekannt.

Soll ein Datenfluß, beispielsweise ein digitalisiertes Videosignal, von einer beliebigen Schaltung, z. B. einem Bildspeicher, übernommen werden, so müssen an den Datenübernahme- bzw. Abfragezeitpunkten stets gültige Daten vorliegen. Bei der Übernahme eines Datenflusses mit den oben beschriebenen Merkmalen besteht wegen der Asynchronität der Daten ein Problem darin, daß die Abfragezeitpunkte des öfteren in die Zeitintervalle fallen können, in denen Pegelwechsel zwischen den einzelnen Informationspegeln auftreten. In solchen Fällen würden falsche oder unzulässige Daten weitergegeben. Bei einer Anwendung in einem bild- und/oder tonsignalverarbeitenden Gerät wären Bild- bzw. Tonstörungen die Folge. Bei einer Anwendung zur Meßwertübertragung würden Pseudomeßwerte entstehen und ggf. falsche Maßnahmen eingeleitet.

Die Aufgabe der Erfindung besteht darin, ein Verfahren bzw.eine Einrichtung zur Aufbereitung asynchroner digitaler Daten gemäß dem Oberbegriff des Anspruchs 1 anzugeben, mittels dessen bzw. mittels der sichergestellt ist, daß an jedem beliebigen Abfragezeitpunkt gültige Informationspegel aus dem Datenfluß übernommen werden können.

Diese Aufgabe wird durch die in den Ansprüchen 1 bzw. 3, die ein Verfahren bzw. eine Einrichtung zur Aufbereitung aynchroner digitaler Daten betreffen, gelöst. Bevorzugte Anwendungsbeispiele sind in den Ansprüchen 3 und 4 angegeben.

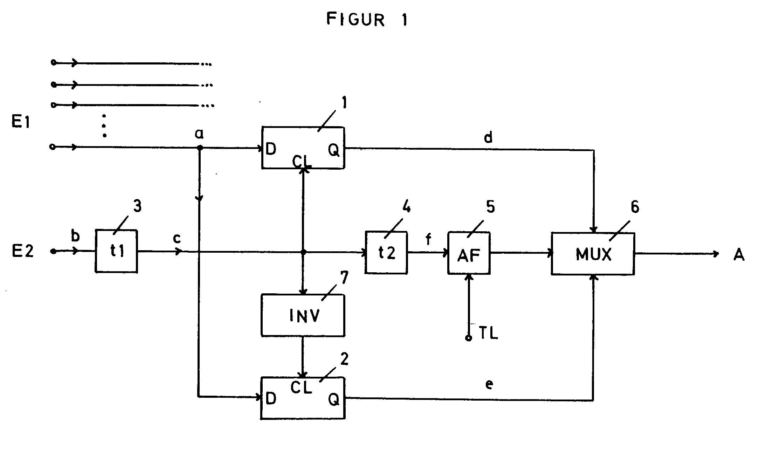

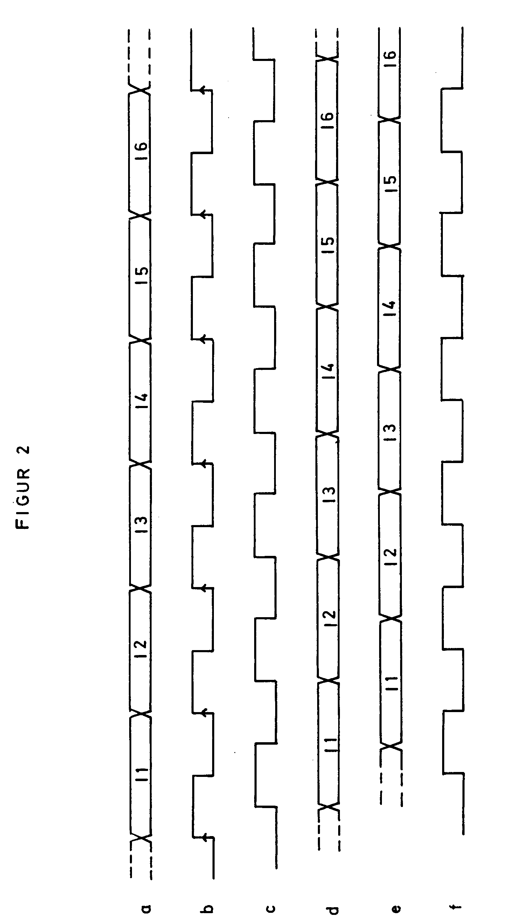

Die Vorteile der Erfindung bestehen insbesondere darin, daß mit geringem Aufwand eine korrekte Datenübernahme erreicht wird. Insbesondere ist sichergestellt, daß die zwischen den einzelnen Informationspegeln des asynchronen digitalen Eingangssignals unumgänglichen Pegelwechsel keinerlei Fehler bei der Datenübernahme verursachen. Weitere vorteilhafte Eigenschaften der Erfindung ergeben sich aus einem Ausführungsbeispiel, welches im folgenden anhand der Figuren 1 und 2 näher erläutert wird.

Es zeigen:

Fig. 1   ein Ausführungsbeispiel zur Erläuterung des beanspruchten Verfahrens, und

Fig. 2   ein Diagramm zur Erläuterung des Ausführungsbeispiels gemäß Figur 1.

Dem Eingang E1 der in Figur 1 gezeigten Einrichtung werden asynchrone digitale Daten zugeführt. Diese liegen vor in Form eines ersten parallelen kontinuierlichen Datenflusses. Jeder Datenfluß besteht aus einzelnen, auf arallelen Leitungen übertragenen Informationspegeln I 1, I 2, I 3, I 4, I 5 , I 6, ... (siehe Fig. 2a). Zwischen den einzelnen Informationspegeln treten (kurze) Zeitintervalle auf, in denen Pegelwechsel erfolgen. Im folgenden wird das Verfahren lediglich für die auf einer der genannten Leitungen übertragenen Signale näher erläutert.

Dem Eingang E 2 der in Figur 1 gezeigten Einrichtung wird ein erstes Taktsignal zugeführt, wie es in Fig. 2b dargestellt ist. Die ansteigenden Flanken dieses ersten Taktsignals definieren jeweils den Beginn eines Informationspegels des in Figur 2a gezeigten Signals. Bei diesem ersten Taktsignal handelt es sich beispielsweise um den Quantisierungstakt eines (nicht gezeichneten) A/D-Wandlers. Dieser Quantisierungstakt hat für einen ggfs. nachgeschalteten Bildspeicher die Funktion eines Einschreib-Adreßzähltakts. Von einer detaillierten Beschreibung der Verarbeitung der Adreßinformation kann abgesehen werden, da sie zum Verständnis der Erfindung nicht notwendig ist.

Das dem Eingang E 1 zugeführte Signal wird gleichzeitig an die D-Eingänge zweier D-Flip-Flops 1 bzw. 2 angelegt. Das dem Eingang E 2 zugeführte erste Taktsignal wird in einem Verzögerungsglied 3, dessen Verzögerungszeit t1 beträgt, verzögert. Das am Ausgang des Verzögerungsgliedes 3 anstehende, um t1 verzögerte erste Taktsignal, welches in Figur 2c gezeigt ist, wird als Taktsignal dem CL-Eingang des Flip-Flops 1 zugeführt. Ferner gelangt das um t1 verzögerte erste Taktsignal über einen Inverter 7 als Taktsignal an den CL-Eingang des Flip-Flops 2.

Die Ausgangssignale der Flip-Flops 1 und 2, die einem Multiplexer 6 zugeführt werden, sind in den Figuren 2d und e dargestellt. Es ist ersichtlich, daß zu allen Zeitpunkten, an denen im Ausgangssignal des Flip-Flops 1 Informationswechsel auftreten, im Ausgangssignal des Flip-Flops 2 keine Informationswechsel auftreten, und umgekehrt. Folglich liegen zu jedem beliebigenZeitpunkt gültige Informationen vor.

Das in Figur 2c gezeigte, um t1 verzögerte erste Taktsignal wird zur Bildung eines Entscheidungstaktsignals in einem Verzögerungsglied 4, dessen Verzögerungszeit t2 beträgt, verzögert. Das am Ausgang des Verzögerungsgliedes 4 anstehende Entscheidungstaktsignal, welches in Figur 2f gezeigt ist, wird einer Abfrageschaltung 5, beispielsweise einem D-FF, zugeführt. In dieser Abfrageschaltung 5 wird der Zustand des Entscheidungstaktsignals von einem zweiten Taktsignal $T_L$ abgefragt. Befindet sich das Entscheidungstaktsignal am Abfragezeitpunkt in einem ersten Zustand ("HIGH"), so wird der Multiplexer 6 vom Ausgangssignal der Abfrageschaltung 5 für das in Fig. 2d gezeigte Ausgangssignal des Flip-Flops 1 durchlässig gesteuert. Befindet sich das Entscheidungstakt hingegen am Abfragezeitpunkt in einem zweiten Zustand ("LOW"), so wird der Multiplexer 6 vom Ausgangssignal der Abfrageschaltung 5 für das in Fig. 2e gezeigte Ausgangssignal des Flip-Flops 2 durchlässig gesteuert.

Bei einem ersten bevorzugten Anwendungsbeispiel ist an den Ausgang des Multiplexers 6 ein (nicht gezeichneter) Bildspeicher angeschlossen. In diesem Fall handelt es sich bei dem oben genannten zweiten Taktsignal $T_L$ um den Schreibtakt des Bildspeichers. Mittels der beschriebenen Einrichtung wird erreicht, daß zum Zeitpunkt des Auftretens des Schreibtaktes stets gültige Daten zur Verfügung stehen, ohne daß der Schreibtakt des Bildspeichers in eine wie auch immer geartete Phasenbeziehung zum am Eingang der Einrichtung anliegenden ersten Taktsignal gebracht werden muß.

Ein weiteres bevorzugtes Anwendungsbeispiel ist die Übertragung digitaler Meßwerte mittels des beanspruchten Verfahrens.

## Patentansprüche

1. Verfahren zur Aufbereitung asynchroner digitaler Daten, die in Form eines ersten parallelen kontinuierlichen Datenflusses vorliegen, der aus einzelnen, auf parallelen Leitungen übertragenen Informationspegeln besteht, wobei zwischen den Informationspegeln Pegelwechsel auftreten, und wobei die gültigen Abfragezeitpunkte jedes Informationspegels durch ein parallel zum Datenfluß übertragenes erstes Taktsignal definiert sind, wobei weiterhin aus dem ersten Datenfluß durch eine erste Zeitverzögerung ein zusätzlicher zweiter Datenfluß gebildet wird,
dadurch gekennzeichnet, daß
- aus dem ersten Taktsignal durch eine zweite Zeitverzögerung ein Entscheidungstaktsignal gewonnen wird, und
- in Abhängigkeit vom Zustand des Entscheidungstaktsignals zu einer beliebigen Abfragezeit entweder die Informationspegel des ersten Datenflusses oder die Informationspegel des zweiten Datenflusses zur Verfügung gestellt werden.

2. Einrichtung zur Durchführung des Verfahrens nach Anspruch 1, dadurch gekennzeichnet, daß
- jedes der auf parallelen Leitungen ankommenden Eingangssignale einer ersten Verzögerungseinrichtung (2) zugeführt wird, wobei die zeitverzögerten Signale den zusätzlichen zweiten Datenfluß bilden,
- beide Datenflüsse einem Multiplexer (6) zugeführt werden,
- das erste Taktsignal einer zweiten Verzögerungseinrichtung (3, 4) zur Bildung eines Entscheidungstaktsignals zugeführt wird,
- der Zustand des Entscheidungstaktsignals in einer Abfrageschaltung (5) durch ein zweites Taktsignal ($T_L$) abgefragt wird,
- und die Abfrageschaltung (5) den Multiplexer (6) in Abhängigkeit vom Zustand des Entscheidungstaktsignals derart steuert, daß entweder die Informationspegel aus dem ersten Datenfluß oder die Informationspegel aus dem zweiten Datenfluß an den Ausgang des Multiplexers (6) gelegt werden.

3. Einrichtung nach Anspruch 2, dadurch gekennzeichnet, daß an den Ausgang des Multiplexers (6) ein Bildspeicher angeschlossen und das zweite Taktsignal ($T_L$) der Schreibtakt des Bildspeichers ist.

4. Einrichtung nach Anspruch 2, gekennzeichnet durch ihre Anwendung bei der Übertragung digitaler Meßwerte.

## Claims

1. Method for conditioning asynchronous digital data which are present in the form of a first parallel continuous data flow which consists of individual information levels transmitted on parallel lines, level changes occurring between the information levels, and the valid interrogation times of each information level being defined by a first clock signal transmitted in parallel with the data flow, it being the case, furthermore, that an additional second data flow is formed from the first data flow by a first time delay, characterised in that
- a decision clock signal is obtained from the first clock signal by a second time delay, and
- depending on the state of the decision clock signal at an arbitrary interrogation time, either the information levels of the first data flow or the information levels of the second data flow are made available.

2. Device for carrying out the method according to Claim 1, characterised in that
- each of the input signals incoming on parallel lines is fed to a first delay device (2), the time-delay signals forming the additional second data flow,

- the two data flows are fed to a multiplexer (6),
- the first clock signal is fed to a second delay device (3, 4) for forming a decision clock signal,
- the state of the decision clock signal is interrogated in an interrogation circuit (5) by a second clock signal ($T_L$),
- and the interrogation circuit (5) controls the multiplexer (6) as a function of the state of the decision clock signal, such that either the information levels from the first data flow or the information levels from the second data flow are applied at the output of the multiplexer (6).

3. Device according to Claim 2, characterised in that an image memory is connected to the output of the multiplexer (6) and the second clock signal ($T_L$) is the writing clock of the image memory.

4. Device according to Claim 2, characterised by its use in the transmission of digital measured values.

**Revendications**

1. Procédé pour préparer des données numériques asynchrones, qui sont présentes sous la forme d'un premier flux de données continu parallèle, qui est constitué par différents niveaux d'information transmis dans des lignes parallèles, selon lequel des changements de niveau apparaissent entre les niveaux d'information , et selon lequel les instants valables d'interrogation de chaque niveau d'information sont définis par un premier signal de cadence transmis en parallèle avec le flux de données, et selon lequel, en outre,un second flux de données supplémentaire est formé à partir du premier flux de données par un premier traitement de retardement,
caractérisé en ce que

- un signal de cadence de décision est formé à partir du premier signal de cadence par un second traitement de retardement, et
- en fonction de l'état du signal de cadence de décision, on dispose, à un instant quelconque d'interrogation, soit des niveaux d'information du premier flux de données, soit des niveaux d'information du second flux de données.

2. Dispositif pour la mise en oeuvre du procédé selon la revendication 1, caractérisé en ce que

- chacun des signaux d'entrée, qui arrivent dans des lignes parallèles, est envoyé à un premier dispositif de retardement (2), les signaux retardés formant le second flux de données supplémentaire,
- les deux flux de données sont envoyés à un multiplexeur (6),
- le premier signal de cadence est envoyé à un second dispositif de retardement (3,4) pour la formation d'un signal de cadence de décision,
- l'état du signal de cadence de décision est interrogé, dans un circuit d'interrogation (5), au moyen d'un second signal de cadence ($T_L$), et
- le circuit d'interrogation (5) commande le multiplexeur (6) en fonction de l'état du signal de cadence de décision de sorte que soit les niveaux d'information provenant du premier flux de données, soit le niveau d'information provenant du second flux de données sont délivrés à la sortie du multiplexeur (6).

3. Dispositif selon la revendication 2, caractérisé en ce qu'une mémoire d'images est raccordée à la sortie du multiplexeur (6) et que le second signal de cadence ($T_L$) est la cadence d'enregistrement dans la mémoire d'images.

4. Dispositif selon la revendication 2, caractérisé par son utilisation pour la transmission de valeurs de mesure numériques.

FIGUR 1

FIGUR 2

EP 0 283 662 B1